# FASCICULE DE BREVET EUROPEEN

(11) **EP 1 781 958 B1**
(45) Date de publication et mention de la délivrance du brevet: **03.10.2018**
(21) Numéro de dépôt: 05798231.6
(22) Date de dépôt: 12.08.2005
(51) Int. Cl.: F16D 55/2265

(54) **FREIN A DISQUE MUNI D' UNE CHAPE DE TAILLE REDUITE**
SCHEIBENBREMSE MIT EINEM BREMSSATEL MIT REDUZIERTEN ABMESSUNGEN.
DISK BRAKE EQUIPPED REDUCED-SIZE YOKE

(30) Priorité: 19.08.2004 FR 0408974
(43) Date de publication de la demande: 09.05.2007
(73) Titulaire: Foundation Brakes France, 93700 Drancy (FR)
(72) Inventeur: MARY DIT CORDIER, Pascal, 49140 SEICHES SUR LE LOIR (FR); VANOUCHE, Norbert, 49800 TRELAZE (FR); BARRET, Philippe, 49000 ANGERS (FR); GAYE, André, 94700 MAISONS ALFORT (FR)
(74) Mandataire: Brevalex
(86) Numéro de dépôt international: PCT/FR2005/002079
(87) Numéro de publication internationale: WO 2006/021682

(56) Documents cités:
- EP-A- 0 989 320
- GB-A- 2 216 204
- US-A- 3 388 774
- US-A- 5 060 766
- US-A- 6 161 658

## Description

L'invention concerne un frein à disque d'un véhicule automobile. L'invention a pour but d'améliorer une performance de freinage de freins à disque tout en diminuant un coût de fabrication de tels freins à disque. L'invention est plus particulièrement destinée au domaine de l'automobile mais pourrait également s'appliquer dans d'autres domaines.

Un frein à disque d'un véhicule est habituellement situé sur un moyeu d'au moins une roue du véhicule, lequel moyeu reçoit un axe de la roue du véhicule et supporte le frein à disque. Un frein à disque est relié à la roue du véhicule de telle manière que la roue communique un mouvement de rotation au disque de frein.

Le frein à disque comporte un étrier formant une première mâchoire et une deuxième mâchoire, la première mâchoire et la deuxième mâchoire se faisant face de part et d'autre d'un plan d'un disque de frein et se rejoignant en dehors du disque. La première mâchoire et la deuxième mâchoire de l'étrier sont munies respectivement d'une première plaquette de frein et d'une deuxième plaquette de frein. Les plaquettes de frein sont placées en regard l'une de l'autre, de part et d'autre du disque de frein de telle manière que leur plan de symétrie soit coplanaire. Cet étrier est destiné à appliquer la première plaquette de frein et la deuxième plaquette de frein par l'intermédiaire de la première mâchoire et de la deuxième mâchoire respectivement contre une première face et contre une deuxième face opposée d'un disque de frein. Un frein à disque comporte également une chape fixée au moyeu d'au moins une roue du véhicule. La chape soutien l'étrier et encadre au moins partiellement chaque plaquette de frein longitudinalement par rapport à un sens du mouvement de rotation du disque de frein.

Lors d'un freinage, la première plaquette de frein et la deuxième plaquette de frein se rapprochent perpendiculairement par rapport à un plan du disque de frein par l'intermédiaire de la première mâchoire et par l'intermédiaire de la deuxième mâchoire. Pour se rapprocher perpendiculairement au plan du disque de frein, au moins une des plaquettes de frein est d'abord poussée en direction du disque de frein par l'intermédiaire d'un piston placé dans au moins une des mâchoires de l'étrier. Le piston exerce une pression par exemple sur la première plaquette de frein de telle manière que le piston tend à rapprocher la première plaquette de frein contre le disque de frein perpendiculairement au plan de ce même disque de frein. Ce piston se déplace sous l'action d'au moins un circuit de freinage engendrant une pression hydraulique sur le piston. Le circuit de freinage peut comporter par exemple un maître cylindre d'un véhicule. La deuxième plaquette de frein est alors dirigée perpendiculairement en direction du disque de frein par une réaction de l'autre mâchoire venant se déplacer en retour en direction du disque.

La chape permet à l'étrier d'être maintenu chevauchant sur le disque. On entend par chevauchant le fait que l'étrier est placé de part et d'autre du plan du disque tout en passant par dessus le disque, à l'extérieur d'une périphérie du disque. La chape permet également de guider l'étrier lors de mouvements d'avancement/d'écartement de ce même étrier par rapport au disque. Les mouvements d'avancement de l'étrier sont réalisés lors d'un freinage du véhicule engendrant le rapprochement des plaquettes contre le disque. Les mouvements d'écartement de l'étrier sont réalisés lors d'un défreinage du véhicule engendrant une désolidarisation des plaquettes par rapport au disque.

Pour maintenir chevauchant l'étrier et pour guider l'étrier, il est connu que la chape comporte des alésages destinées à recevoir des colonnettes de guidage portées par l'étrier, les colonnettes et les alésages coopérant pour entraîner l'avancement/l'écartement de l'étrier par rapport au disque. Ces colonnettes permettent à l'étrier d'être supporté par la chape tout en facilitant le guidage des deux plaquettes contre le disque. La chape s'étend au-dessus du disque avec ses alésages de manière à ce que les colonnettes glissent dans ces alésages tout en passant également par-dessus le disque. La chape maintient les deux plaquettes et elle récupère la majeure partie du couple de freinage.

Dans le document FR 2 747 751, il est décrit un disque de frein muni d'une chape et d'un étrier. Ce document décrit que les deux colonnettes de guidage sont portées par la chape et que les alésages sont formés dans l'étrier. Ces colonnettes de guidage sont disposées chacune avec un axe parallèle à un axe central du disque. Plus particulièrement, ces colonnettes sont disposées pour l'une avec un axe passant au-delà de la périphérie du disque et s'étendant de part et d'autre du disque et pour l'autre avec un axe passant à l'intérieur de cette même périphérie, la deuxième colonnette ne s'étendant que d'un côté du disque. Cette disposition particulière des axes des colonnettes permet de réduire de façon importante la distance entre ces deux axes ce qui résulte en un couple de frottement minimal. L'arc-boutement des colonnettes est ainsi réduit au minimum, et le coulissement peut se produire dans les conditions optimales.

Cependant, ce type de frein à disque présente l'inconvénient de posséder un poids élevé. Les performances de freinage en sont d'autant plus réduites.

Pour résoudre ce problème, l'invention prévoit de diminuer le poids d'un frein à disque tout en augmentant les performances de freinage. Notamment, l'invention prévoit que l'une des plaquettes est retenue en rotation par la chape et que l'autre plaquette est retenue en rotation par l'étrier. On peut ainsi prévoir une demi-chape s'étendant par un seul côté du plan du disque. Une telle forme de la chape permet avantageusement de réduire le poids du frein à disque et d'améliorer la performance du frein à disque. **Un frein comportant une chape s'étendant que d'un côté du disque est décrit dans** US 5 622 241**.**

Au cours d'un freinage du véhicule, le piston entraîne le déplacement d'une première plaquette en direction du disque, cette première plaquette étant retenue en rotation par la chape tandis qu'une deuxième plaquette peut être appliquée contre l'autre face du disque par réaction de l'étrier tout en étant retenu en rotation par l'étrier.

Le déplacement de l'étrier par rapport à la chape s'effectuent par coopération des colonnettes et des alésages respectifs. Dans l'invention, on prévoit que les colonnettes sont portées par la chape et que les alésages sont formés par l'étrier.

L'étrier peut être avantageusement creusé d'au moins une fenêtre favorisant ainsi une meilleure évacuation thermique de l'étrier. Cela permet également d'augmenter la largeur de la voûte de l'étrier et aussi d'augmenter avantageusement la raideur de l'étrier pour un poids équivalent. Et enfin, cela permet aussi de réduire le poids de l'étrier.

Les plaquettes de frein peuvent être fixées à l'étrier et à la chape par des moyens de solidarisation dont le vissage, l'accroche par au moins un pion, ou par au moins un ressort.

L'invention permet également d'augmenter un diamètre du disque pour une même roue.

L'invention consiste en un frein selon la revendication 1. Plus particulièrement, l'invention a pour objet un frein à disque pour véhicule automobile comprenant
- un étrier de frein à disque, lequel étrier étant muni d'un cylindre hydraulique avec un piston qui est monté coulissant dans ce cylindre et d'un nez, l'étrier possédant une forme destinée à chevaucher un disque,
- une chape solidaire du véhicule, l'étrier étant monté mobile sur la chape, le disque étant destiné à être disposé entre le nez et le piston et à y circuler en rotation,
- deux moyens de friction, disposés de part et d'autre du disque, et aptes à être appliqués contre des faces opposées du disque, par l'intermédiaire respectivement du piston et du nez,
caractérisé en ce que
- un premier moyen de friction est retenu en rotation par la chape, et un second moyen de friction est retenu en rotation par l'étrier.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : une vue en coupe partielle d'un frein à disque passant par un plan perpendiculaire à un plan formé par un disque de frein, selon l'invention ;
- Figure 2 : une vue de profil d'un frein à disque, selon l'invention ;
- Figure 3 : une vue en perspective d'un frein à disque, selon l'invention ;
- Figure 4 : une représentation schématique d'un moyen de friction relié à un étrier, selon l'invention ;
- Figures 5a, 5b, 6 et 7 : des représentations schématiques d'un moyen de friction relié à l'étrier ou à la chape, selon des variantes de l'invention.

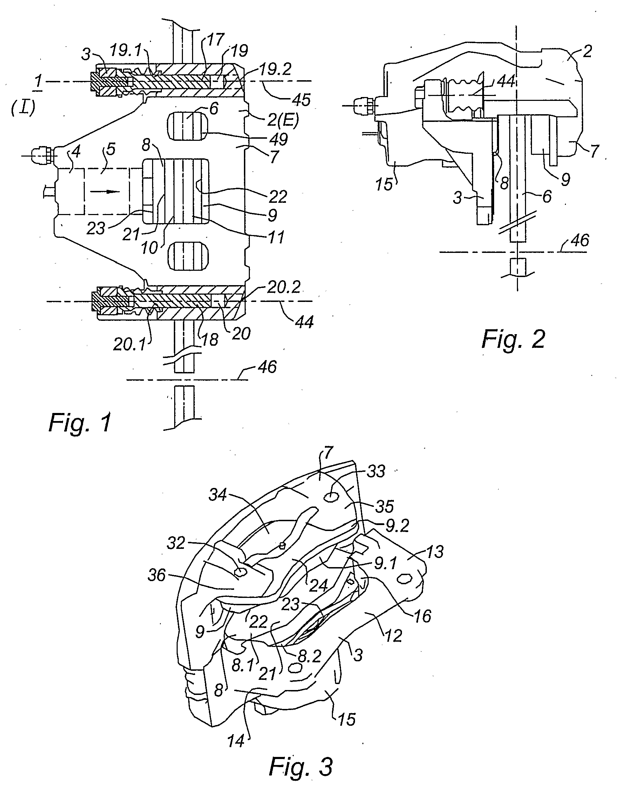

La figure 1 illustre un frein à disque 1 pour véhicule automobile, selon l'invention. Le frein à disque 1 comporte un étrier 2 et une chape 3. L'étrier 2 est muni d'un cylindre hydraulique 4 avec un piston 5 qui est monté coulissant dans ce cylindre. L'étrier 2 comporte également un nez 7. La chape 3 est solidaire du véhicule et l'étrier est montée mobile sur la chape. Un disque 6 est interposé entre le nez 7 de l'étrier 2 et le piston 5 de ce même étrier 2 tout en étant destiné à circuler en rotation. L'étrier possède une forme destinée à chevaucher le disque 6. Comme précédemment mentionné, on entend par chevaucher le fait que l'étrier 2 est positionné de part et d'autre d'un plan du disque tout en étant relié par dessus le disque, en dehors d'une périphérie du disque. Le disque 6 délimite de part et d'autre du plan du disque un côté externe (E) et un côté interne (I), le côté externe étant éloigné d'un moyeu (non représenté) du véhicule et le côté interne étant proche de ce même moyeu. Le frein à disque comporte également deux moyens de friction 8 et 9 disposés de part et d'autre du plan du disque 6. Ces moyens de friction 8 et 9 sont aptes à être appliqués contre des faces 10 et 11 opposées du disque par l'intermédiaire respectivement du piston 5 et du nez 7 de l'étrier 2.

Selon l'invention, un premier moyen de friction 8 est retenu en rotation par la chape 3 et un second moyen de friction 9 est retenu en rotation par le nez 7 de l'étrier 2, figures 2 et 3. La chape 3 forme une anse avec une partie intermédiaire 12, un premier bras 13 et un deuxième bras 14, le premier bras 13 et le deuxième bras 14 étant reliés par la partie intermédiaire 12, figure 3. Dans l'exemple préféré de l'invention figures 2 et 3, la chape forme une demi-chape. La chape s'étend dans un plan parallèle à un plan formé par le disque. Elle n'est pas placée de part et d'autre du plan du disque.

Les deux bras 14 et 13 et la partie intermédiaire 12 de la chape 3 forment un espace 16 à l'intérieur duquel est disposé le premier moyen de friction 8, figure 3. Un moyen de friction 8, 9 est formé par une plaquette de frein 8.1, 9.1 et par un support de plaquette 8.2, 9.2, figure 3. Le support de plaquette relie la plaquette correspondante au nez de l'étrier ou à la chape.

Chaque plaquette de frein 8.1 et 9.1 comporte respectivement une face intérieure 21, 22 et une face extérieure 23 et 24, chacune des faces extérieures étant opposée au disque et chacune des faces intérieures étant placée en regard du disque.

L'étrier 2 chevauche le disque 6 tout en possédant une forme générale en U, figure 2. L'étrier forme une première branche 15 du U et une deuxième branche 7 du U. La deuxième branche 7 forme le nez 7 de l'étrier. Le deuxième moyen de friction 9 est porté par le nez 7 de l'étrier 2. L'autre branche 15 comporte le cylindre hydraulique 4 avec le piston 5 monté coulissant dans ce même cylindre. Le piston 5 est apte à déplacer le premier moyen de friction 8 en direction du disque 6.

Dans un premier exemple de réalisation, l'étrier 2 est une pièce monobloc. En variante, l'étirer est formé en deux parties (non représentées) une première partie portant le piston et une deuxième partie portant un des moyens de friction. La première partie est reliée à la deuxième partie par des moyens de fixation tels que des vis.

La chape 3 comporte deux colonnettes 17 et 18 qui s'étendent perpendiculairement au plan formé par le disque 6, figure 1. Ces colonnettes 17 et 18 sont portées respectivement par le premier bras 13 et par le deuxième bras 14 de la chape. La première colonnette et la deuxième colonnette peuvent être au moins partiellement filetées pour être introduites dans une cavité taraudée en correspondance, laquelle cavité étant formé dans un bras correspondant de la chape. De telles colonnettes peuvent être réalisées par frappe de la matière ou par roulage.

Chaque colonnette 17, 18 s'étend le long d'un axe 44 et 45 respectivement, chacun de ces axes étant parallèle à un axe 46 de rotation du disque et perpendiculaire au plan du disque, figures 1, 2. La première colonnette et la deuxième colonnette sont destinées à coulisser au travers d'un alésage correspondant 19 et 20. Le premier alésage 19 et le deuxième alésage 20 sont formés dans l'étrier 2 et sont aptes à recevoir chacun une colonnette.

Comme représenté en traits pointillés figure 1, les alésages sont avantageusement traversants de manière à ce que chacun de ces alésages débouche par deux extrémités opposées en direction du côté interne (I) et en direction du côté externe (E). Le premier alésage 19 débouche par une première première extrémité 19.1 en direction du côté interne (I) et par une deuxième première extrémité 19.2 en direction du côté externe (E). Le deuxième alésage 20 débouche par une première deuxième extrémité 20.1 en direction du côté interne (I) et par une deuxième deuxième extrémité 20.2 en direction du côté externe (E).

De tels alésages traversants par deux extrémités facilitent avantageusement l'usinage de l'étrier. Il n'est plus nécessaire de régler une profondeur d'usinage des alésages. Il est alors prévu de boucher les deuxièmes extrémités 19.2, 20.2 à l'aide d'un bouchon (non représenté) que l'on vient visser à l'intérieur de l'alésage correspondant.

D'autre part, de tels alésages traversants peuvent avantageusement permettre à l'étrier de coulisser par rapport aux colonnettes par une des deux extrémités proche du côté interne (I) d'une part et de fixer par vissage d'autre part le deuxième moyen de friction 9 par l'autre extrémité éloignée du côté interne (non représenté). C'est le support de plaquette 9.2 de ce deuxième moyen de friction 9 qui peut être fixé à une des extrémités de l'alésage éloignée du côté interne (I). La fixation de ce support de plaquette 9.2 à une telle extrémité d'alésage permet avantageusement d'éviter de reboucher les alésages.

Et enfin, de tels alésages débouchants peuvent avantageusement faciliter un démontage du frein à disque par l'extérieur du véhicule. En effet, au moins une des colonnettes est munie à une de son extrémité libre d'un moyen de réception d'un outil de dévissage, par exemple d'une clé à six pans.

L'étrier est apte à coulisser lors d'un freinage et d'un défreinage d'une longueur efficiente par rapport aux colonnettes. On entend par longueur efficiente une longueur de glissement de l'étrier par rapport aux colonnettes lors d'un freinage du véhicule. La longueur efficiente peut être mesurée le long d'un axe parallèle à l'axe d'une colonnette. Les alésages de l'étrier possèdent une longueur d'encastrement supérieure à la longueur efficiente augmentée de la somme des longueurs d'usures tolérables des plaquettes et du disque. Dans un exemple, les plaquettes de frein mesurent 2 centimètres d'épaisseur et les colonnettes peuvent donc être enfoncées dans leur alésage correspondant d'une longueur de 3 à 5 centimètres. Les longueurs d'usures des plaquettes et du disque sont mesurées le long d'un axe parallèle à l'axe 46 de rotation du disque ou à l'axe 44 d'une colonnette.

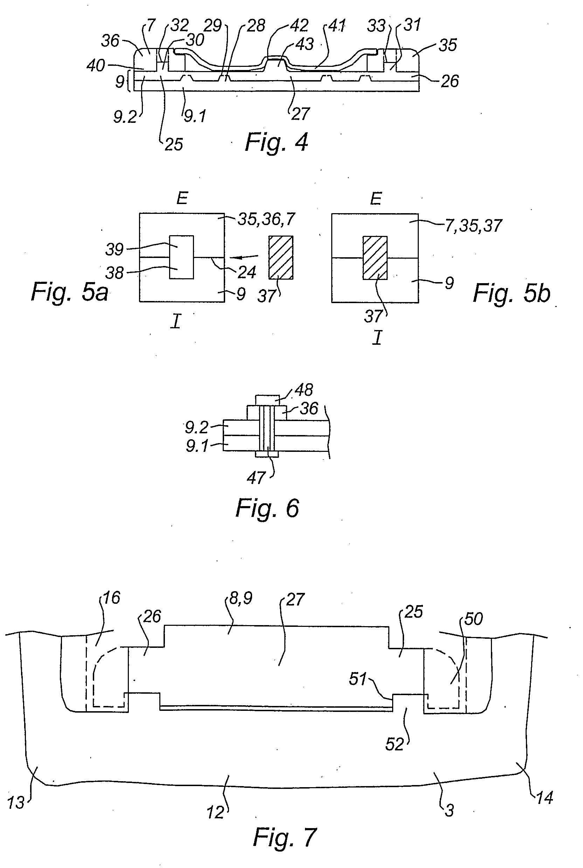

Chaque plaquette de frein peut être reliée au support correspondant par de petits ergots d'accrochage formés par chacune des plaquettes destinés à venir s'encastrer dans des cavités correspondantes formées par le support. Dans l'exemple figure 4, la deuxième plaquette 9.1 peut être reliée au deuxième support de plaquette 9.2 par encastrement des ergots tels que 28 formés par la deuxième plaquette 9.1 et venant s'encastrer dans des cavités 29 correspondantes formées dans le deuxième support de plaquette 9.2. L'association de la deuxième plaquette 9.1 au deuxième support de plaquette 9.2 peut s'effectuer par compression de chacun des ergots 28 dans une cavité 29 correspondante. Les ergots et les cavités sont représentés en traits pointillés figure 4.

Au moins un moyen de friction peut être relié au nez de l'étrier et/ou à la chape par l'intermédiaire de saillies et d'encoches, les saillies 30, 31 étant aptes à s'engager dans une encoche 32,33 ménagée sur la chape ou sur le nez de l'étrier, les encoches et les saillies associées formant des moyens de solidarisation du moyen de friction à la chape ou au nez d'étrier. Les encoches et les saillies sont réalisées de telle manière que la plaquette correspondante ne bouge quasiment pas par rapport à l'étrier. Les encoches et les saillies sont réalisées également de telle manière qu'il n'y a quasiment pas de jeu axial entre le support de plaquette et le nez d'étrier.

Dans l'exemple figure 4, est représenté schématiquement le deuxième moyen de friction 9 relié au nez 7 de l'étrier 2. Ce deuxième moyen de friction 9 comporte une plaquette de frein 9.1 et un support de plaquette 9.2. Le deuxième moyen de friction 9 est relié au nez de l'étrier par l'intermédiaire du support de plaquette 9.2. Le support de plaquette 9.2 comporte une première saillie 30 et une deuxième saillie 31. En correspondance, le nez 7 d'étrier comporte une première encoche 32 et une deuxième encoche 33 recevant lesdites saillies 31 et 30. Les encoches et les saillies sont formées de telle manière que le support de plaquette muni de la plaquette est accolé au nez.

Le nez 7 d'étrier portant le deuxième moyen de friction 9 peut être creusé en son milieu d'un orifice 34 délimitant de part et d'autre de ce même orifice une première extension 35 et une deuxième extension 36, figures 3 et 4. Une telle forme d'étrier 2 permet de diminuer le poids du frein à disque selon l'invention.

Pour retenir le moyen de friction au nez de l'étrier ou à la chape, un ressort tel 41 peut être fixé à un support de plaquette correspondant tout en étant placé en appui contre l'étrier ou la chape. En effet, dans l'exemple figure 4, un tel ressort 41 destiné à maintenir le deuxième moyen de friction au nez 7 de l'étrier formé par une lamelle métallique 41 qui peut être placé depuis la première extension jusqu'à la deuxième extension tout en prenant appui contre la première extension, contre la deuxième extension et contre le support de plaquette correspondant. Ce ressort 41 s'étend parallèlement au plan formé par le disque. Ce ressort 41 permet de retenir le deuxième moyen de friction au nez de l'étrier tout en maintenant le deuxième moyen de friction flottant par rapport au nez.

Le ressort 41 relie la première extension à la deuxième extension tout en s'accrochant au deuxième moyen de friction par des moyens de solidarisation. En effet, ce ressort 41 est formé à partir d'une plaque métallique qui est localement déformée en son milieu pour former un logement de réception 42, figure 4. Ce logement de réception 42 reçoit une bosse 43 formée en correspondance par le support de plaquette 9.2. En étant sur la bosse 43, le ressort 41 s'appuie d'une part contre la première extension 35 et contre la deuxième extension 36 d'autre part. La plaque métallique formée par le ressort 41 tend à se courber entre le logement de réception 42 et chacun des endroits où s'appuie le ressort 41 sur les extensions correspondantes.

Dans une variante, au moins un support d'un moyen de friction est muni d'au moins un premier renfoncement 38 et le nez d'étrier et/ou la chape est muni d'un second renfoncement 39. Au moins un pion 37 amovible est logé partiellement dans le premier renfoncement et dans le deuxième renfoncement. Dans l'exemple figures 5a et 5b, le second moyen de friction peut être relié au nez de l'étrier par le pion 37 logé partiellement dans le premier renfoncement 38 ménagé par le support de plaquette 9.2 du second moyen de friction 9 et logé partiellement dans le second renfoncement 39 ménagé dans le nez d'étrier. L'insertion du pion 37 peut d'abord s'effectuer dans l'un des deux renfoncements 38 ou 39 puis soit le deuxième moyen de friction soit l'étrier est appliqué sur ce même deuxième pion 37 de manière à imbriquer ce pion 37 entre le nez d'étrier et le deuxième moyen de friction. Dans ce dernier cas, ces renfoncements 38 et 39 sont avantageusement non débouchants.

Selon une autre variante de l'invention, le second moyen de friction peut être relié au nez de l'étrier et/ou à la chape par l'intermédiaire d'au moins une vis 47 et d'un écrou 48, figure 6.

Chaque moyen de friction comporte une première oreille 25, une deuxième oreille 26 et un corps central 27. Dans l'exemple figure 4, le deuxième moyen de friction 9 comporte une première oreille 25 et une deuxième oreille 26 et un corps central 27. Selon une autre variante de l'invention figure 7, les oreilles 25 et 26 du moyen de friction correspondant sont prolongées pour former un crochet 50. Le crochet 50 est représenté en traits pointillés figure 7. Ce crochet 50 délimite avec le corps 27 du moyen de friction un logement d'encastrement 51 à l'intérieur duquel s'insère flottant la chape 3 ou le nez 7 d'étrier 2. Pour ce faire, la chape ou le nez d'étrier forme une protubérance 52 de forme complémentaire au logement d'encastrement. Le logement 51 et la protubérance 52 sont réalisées de manière à ce que le moyen de friction soit inséré flottant dans la chape ou dans l'étrier. Le moyen de friction ainsi flottant est de type « pull push » et reprend ainsi une partie du couple de freinage et participe à la rigidité de la chape. Dans l'exemple figure 7, le premier moyen de friction est placé dans l'espace 16. C'est la partie intermédiaire 12 qui forme au moins une protubérance 52 de forme complémentaire au logement d'encastrement.

Pour faciliter une évacuation thermique du frein à disque selon l'invention, l'étrier peut comporter au moins une fenêtre tel que 49, figure 1. Cette fenêtre permet de diminuer le poids d'un tel frein à disque et permet également de favoriser un dégagement de chaleur produit au cours du freinage du véhicule résultant du frottement des plaquettes contre le disque.

Le disque comporte un centre et une périphérie, le centre étant un endroit du disque par où est situé l'axe de rotation 46 du disque perpendiculairement au plan du disque. La périphérie du disque délimite le disque. La matière formée par l'étrier peut être répartie en plus grande quantité aux alentours d'un premier endroit et aux alentours d'un deuxième endroit, le premier endroit et le deuxième endroit étant placés le long de la périphérie du disque et s'opposant l'un à l'autre, qu'aux alentours d'un centre de ce même étrier situé également le long de la périphérie du disque. Plus précisément, la matière formée par l'étrier peut être répartie avec une quantité de matière plus importante à un premier endroit où est formé le premier alésage et à un deuxième endroit où est formé le deuxième alésage qu'à un endroit correspondant au centre de ce même étrier. Une telle répartition de la matière formant l'étrier permet avantageusement de gagner jusqu'à 20% en absorption de freinage.

## Revendications

1. Frein à disque (1) pour véhicule automobile comprenant
- un étrier (2) de frein à disque, lequel étrier étant muni d'un cylindre hydraulique (4) avec un piston (5) qui est monté coulissant dans ce cylindre et d'un nez (7), l'étrier possédant une forme destinée à chevaucher un disque (6),
- une chape (3) solidaire du véhicule, l'étrier étant monté mobile sur la chape, le disque étant destiné à être disposé entre le nez et le piston et à y circuler en rotation,
- deux moyens de friction (8, 9), disposés de part et d'autre du disque, et aptes à être appliqués contre des faces (10,11) opposées du disque, par l'intermédiaire respectivement du piston et du nez,
la chape (3) s'étendant sur un seul côté du plan du disque (6),
le frein (1) comportant au moins deux colonnettes de guidage (17,18) qui sont fixes par rapport à la chape (3),
l'étrier (2) étant monté coulissant sur la chape (3) par l'intermédiaire des colonnettes (17,18), et comportant au moins deux alésages (19,20) aptes à recevoir chacun une des colonnettes (17, 18),
les colonnettes (17, 18) s'étendant chacune des deux côtés du disque (6), en étant au-dessus du disque et en s'étendant perpendiculairement au plan du disque (6).

2. Frein selon la revendication 1, **caractérisé en ce que** le premier moyen de friction est disposé dans un espace ménagé (16) entre deux bras (13, 14) de l'anse formée par la chape.

3. Frein selon l'une des revendications 1 à 2, **caractérisé en ce que**
- l'étrier chevauche le disque tout en possédant une forme générale en U, une première branche (15) du U et une deuxième branche (7) du U s'étendant parallèlement à un plan du disque,
- le deuxième moyen de friction est porté par l'une des deux branches du U formé par l'étrier, l'autre branche du U de l'étrier comportant le cylindre hydraulique et le piston, le piston étant apte à déplacer le premier moyen de friction en direction du disque.

4. Frein selon la revendication 3, **caractérisé en ce que**
- chacun des moyens de friction (8,9) comporte une plaquette de frein (8.1,9.1) et un support de plaquette (8.2,9.2),
- l'étrier est apte à coulisser d'une longueur efficiente par rapport aux colonnettes lors d'un freinage et d'un défreinage, les alésages possédant par ailleurs une longueur d'encastrement supérieure à la longueur efficiente augmentée de la somme des longueurs d'usures tolérables des plaquettes et du disque.

5. Frein selon l'une des revendications précédentes, **caractérisé en ce que**
- l'étrier est muni d'au moins deux alésages traversants aptes à recevoir les colonnettes pour monter l'étrier sur la chape, les alésages traversants étant débouchants par deux extrémités opposées (19.1,20.1,19.2,20.2), une extrémité servant à accueillir une colonnette, l'autre extrémité lui étant opposée, et
- au moins l'un des moyens de friction est fixé par l'intermédiaire de l'extrémité opposée à celle servant à accueillir la colonnette.

6. Frein selon l'une quelconque des revendications 1 à 5, **caractérisé en ce qu'**au moins un moyen de friction est muni d'un support de plaquette avec au moins une saillie (30,31) apte à s'engager dans une encoche (32, 33) ménagée sur la chape ou sur le nez de l'étrier, les encoches et les saillies associées formant des moyens de solidarisation du moyen de friction à la chape ou au nez d'étrier.

7. Frein selon la revendication 6, **caractérisé en ce qu'**un ressort de guidage (41) est interposé entre l'étrier ou la chape et le moyen de friction correspondant tout en étant placé autour d'une saillie.

8. Frein selon l'une des revendications 1 à 7, **caractérisé en ce que**
- au moins un support d'un moyen de friction est muni d'au moins un premier renfoncement (38) et le nez d'étrier et/ou la chape est muni d'un second renfoncement (39),
- au moins un pion (37) amovible est logé partiellement dans le premier renfoncement et dans le deuxième renfoncement.

9. Frein selon l'une des revendications 1 à 8, **caractérisé en ce qu'**au moins un moyen de friction est relié au nez de l'étrier et/ou à la chape par l'intermédiaire d'au moins une vis (47) et un écrou (48).

10. Frein selon l'une des revendications 1 à 9, **caractérisé en ce que** le nez d'étrier portant le deuxième moyen de friction est creusé en son milieu d'un orifice (34) délimitant de part et d'autre de cet orifice une première extension (35) et une deuxième extension (36), le deuxième moyen de friction étant fixé au nez d'étrier par l'intermédiaire d'au moins l'une de ces extensions.

11. Frein selon la revendication 10, **caractérisé en ce qu'**un ressort (41) relie la première extension (35) à la deuxième extension (36) tout en s'accrochant au deuxième moyen de friction par des moyens de solidarisation.

12. Frein selon l'une des revendications 1 à 11, **caractérisé en ce que** la matière composant l'étrier est répartie en plus grande quantité aux alentours d'un premier endroit et aux alentours d'un deuxième endroit, le premier endroit et le deuxième endroit étant placés le long d'une périphérie du disque et s'opposant l'un à l'autre, qu'aux alentours d'un centre de ce même étrier situé également le long de la périphérie du disque.

13. Frein selon l'une des revendications 1 à 12, **caractérisé en ce qu'**un support d'un moyen de friction (8,9) comporte deux oreilles (25,26) et un corps (27), chacune des oreilles se prolongeant pour former un crochet (50), le crochet délimitant avec le corps un logement d'encastrement (51) destiné à accueillir une protubérance (52) de forme complémentaire formée par la chape ou par l'étrier.

## Patentansprüche

1. Scheibenbremse (1) für ein Automobilfahrzeug, umfassend:
- einen Scheibenbremssattel (2), wobei der Sattel mit einem hydraulischen Zylinder (4) mit einem Kolben (5) ausgestattet ist, der verschiebbar in diesem Zylinder montiert ist, sowie mit einer Nase (7), wobei der Sattel eine Form besitzt, die dazu ausgelegt ist, eine Scheibe (6) zu übergreifen,
- einen Gabelkopf (3), der mit dem Fahrzeug verbunden ist, wobei der Sattel bewegbar auf dem Gabelkopf montiert ist, wobei die Scheibe dazu ausgelegt ist, zwischen der Nase und dem Kolben angeordnet zu sein und dort in Drehung zu zirkulieren,
- zwei Reibmittel (8, 9), die auf beiden Seiten der Scheibe angeordnet und dazu ausgelegt sind, mittels des Kolbens beziehungsweise der Nase gegen entgegengesetzte Flächen (10, 11) der Scheibe gedrückt zu werden,
wobei sich der Gabelkopf (3) auf einer einzigen Seite der Ebene der Scheibe (6) erstreckt,
wobei die Bremse (1) wenigstens zwei Führungssäulen (17, 18) umfasst, die bezüglich des Gabelkopfs (3) fest sind,
wobei der Sattel (2) mittels der Säulen (17, 18) verschiebbar auf dem Gabelkopf (3) montiert ist und wenigstens zwei Bohrungen (19, 20) umfasst, die dazu ausgelegt sind, jeweils eine der Säulen (17, 18) aufzunehmen,
wobei sich die Säulen (17, 18) auf den beiden jeweiligen Seiten der Scheibe (6) erstrecken, wobei sie über der Scheibe sind und sich orthogonal zur Ebene der Scheibe (6) erstrecken.

2. Bremse nach Anspruch 1, **dadurch gekennzeichnet, dass** das erste Reibmittel in einem Raum (16) angeordnet ist, der zwischen zwei Armen (13, 14) der Einbuchtung vorgesehen ist, die durch den Gabelkopf gebildet wird.

3. Bremse nach einem der Ansprüche 1 bis 2, **dadurch gekennzeichnet, dass**
- der Sattel die Scheibe übergreift, wobei er eine allgemeine U-Form besitzt, wobei ein erster Arm (15) des U und ein zweiter Arm (7) des U sich parallel zu einer Ebene der Scheibe erstrecken,
- wobei das zweite Reibmittel durch einen der zwei Arme des U getragen wird, das durch den Sattel gebildet wird, wobei der andere Arm des U des Sattels den hydraulischen Zylinder und den Kolben umfasst, wobei der Kolben dazu ausgelegt ist, das erste Reibmittel in Richtung der Scheibe zu verlagern.

4. Bremse nach Anspruch 3, **dadurch gekennzeichnet, dass**
- jedes der Reibmittel (8, 9) eine Bremsplatte (8.1, 9.1) und einen Plattenträger (8.2, 9.2) umfasst,
- der Sattel dazu ausgelegt ist, während einer Bremsenbetätigung und einer Bremsenlösung sich um eine wirksame Länge bezüglich der Säulen zu verschieben, wobei die Bohrungen ferner eine Einbaulänge besitzen, die größer ist als die wirksame Länge erhöht um die Summe der tolerierbaren Verschleißlängen der Platten und der Scheibe.

5. Bremse nach einem der vorhergehenden Ansprüche, **dadurch gekennzeichnet, dass**
- der Sattel mit wenigstens zwei durchgehenden Bohrungen ausgestattet ist, die dazu ausgelegt sind, die Säulen aufzunehmen, um den Sattel auf dem Gabelkopf zu montieren, wobei die durchgehenden Bohrungen an zwei entgegengesetzten Enden (19.1, 20.1, 19.2, 20.2) münden, wobei ein Ende dazu dient, eine Säule aufzunehmen, wobei das andere Ende ihm entgegengesetzt ist, und
- wenigstens das eine der Reibmittel mittels des Endes befestigt ist, das jenem entgegengesetzt ist, das zur Aufnahme der Säule dient.

6. Bremse nach einem der Ansprüche 1 bis 5, **dadurch gekennzeichnet, dass** wenigstens ein Reibmittel mit einem Plattenträger mit wenigstens einem Vorsprung (30, 31) ausgestattet ist, der dazu ausgelegt ist, in einer Einkerbung (32, 33) einzugreifen, die an dem Gabelkopf vorgesehen ist, oder an der Nase des Sattels, wobei die Einkerbungen und die zugeordneten Vorsprünge Mittel zur Verbindung des Reibmittels mit dem Gabelkopf oder mit der Nase des Sattels bilden.

7. Bremse nach Anspruch 6, **dadurch gekennzeichnet, dass** eine Führungsfeder (41) zwischen dem Sattel oder dem Gabelkopf und dem entsprechenden Reibmittel eingefügt ist und hierbei um einen Vorsprung herum platziert ist.

8. Bremse nach einem der Ansprüche 1 bis 7, **dadurch gekennzeichnet, dass**
- wenigstens ein Träger eines Reibmittels mit wenigstens einer ersten Vertiefung (38) ausgestattet ist, und die Nase des Sattels und/oder der Gabelkopf mit einer zweiten Vertiefung (39) ausgestattet ist,
- wenigstens ein entfernbarer Zapfen (37) teilweise in der ersten Vertiefung und in der zweiten Vertiefung untergebracht ist.

9. Bremse nach einem der Ansprüche 1 bis 8, **dadurch gekennzeichnet, dass** wenigstens ein Reibmittel mittels wenigstens einer Schraube (47) und einer Mutter (48) mit der Nase des Sattels und/oder mit dem Gabelkopf verbunden ist.

10. Bremse nach einem der Ansprüche 1 bis 9, **dadurch gekennzeichnet, dass** die Nase des Sattels, die das zweite Reibmittel trägt, in ihrer Mitte durch eine Öffnung (34) ausgehöhlt ist, die auf beiden Seiten dieser Öffnung eine erste Verlängerung (35) und eine zweite Verlängerung (36) begrenzt, wobei das zweite Reibmittel an der Nase des Sattels mittels wenigstens einer dieser Verlängerungen befestigt ist.

11. Bremse nach Anspruch 10, **dadurch gekennzeichnet, dass** eine Feder (41) die erste Verlängerung (35) mit der zweiten Verlängerung (36) verbindet und hierbei durch Verbindungsmittel am zweiten Reibmittel befestigt ist.

12. Bremse nach einem der Ansprüche 1 bis 11, **dadurch gekennzeichnet, dass** das Material, aus dem der Sattel gebildet ist, in größerer Menge in der Umgebung einer ersten Stelle und in der Umgebung einer zweiten Stelle verteilt ist, wobei die erste Stelle und die zweite Stelle entlang eines Umfangs der Scheibe platziert sind und zueinander entgegengesetzt sind, als in der Umgebung eines Zentrums dieses selben Sattels, das ebenfalls entlang des Umfangs der Scheibe liegt.

13. Bremse nach einem der Ansprüche 1 bis 12, **dadurch gekennzeichnet, dass** ein Träger eines Reibmittels (8, 9) zwei Ohren (25, 26) und einen Körper (27) umfasst, wobei jedes der Ohren verlängert ist, um einen Haken (50) zu bilden, wobei der Haken mit dem Körper eine Einbauaufnahme (51) begrenzt, die dazu ausgelegt ist, einen Vorsprung (52) mit komplementärer Form aufzunehmen, der durch den Gabelkopf oder durch den Sattel gebildet ist.

## Claims

1. A disc brake (1) for a motor vehicle, comprising
- a disc brake caliper (2), said caliper being provided with a hydraulic cylinder (4) with a piston (5) that is mounted sliding in this cylinder and a nose (7), the caliper having a shape intended to straddle a disc (6),
- a clevis (3) secured to the vehicle, the caliper being mounted movable on the clevis, the disc being intended to be arranged between the nose and the piston and to rotate therein,
- two friction means (8, 9), arranged on either side of the disc, and able to be pressed against opposite faces (10, 11) of the disc, respectively via the piston and the nose,
the clevis (3) extending on a single side of the plane of the disc (6),
the brake (1) including at least two pin guides (17, 18) that are stationary relative to the clevis (3),
the caliper (2) being mounted sliding on the clevis (3) via the pin guides (17, 18), and including at least two bores (19, 20) each able to receive one of the pin guides (17, 18),
the pin guides (17, 18) each extending on two sides of the disc (6), while being above the disc and extending perpendicular to the plane of the disc (6).

2. The brake according to claim 1, **characterized in that** the first friction means is positioned in a space (16) arranged between two arms (13, 14) of the loop formed by the clevis.

3. The brake according to one of claims 1 to 2, **characterized in that**
- the caliper straddles the disc while being generally U-shaped, a first branch (15) of the U and a second branch (7) of the U extending parallel to a plane of the disc,
- the second friction means is supported by one of the two branches of the U formed by the caliper, the other branch of the U of the caliper including the hydraulic cylinder and the piston, the piston being able to move the first friction means toward the disc.

4. The brake according to claim 3, **characterized in that**
- each of the friction means (8, 9) includes a brake pad (8.1, 9.1) and a pad support (8.2, 9.2),
- the caliper is able to slide over an efficient length relative to the pins during braking and releasing of the brake, the bores also having an embedding length greater than the efficient length increased by the sum of the allowable wearing lengths of the pads and the disc.

5. The brake according to one of the preceding claims, **characterized in that**
- the caliper is provided with at least two through bores able to receive the pins to mount the caliper on the clevis, the through bores emerging by two opposite ends (19.1, 20.1, 19.2, 20.2), one end serving to accommodate a pin, the other end being opposite it, and
- at least one of the friction means is attached via the end opposite that used to accommodate the pin.

6. The brake according to any one of claims 1 to 5, **characterized in that** at least one friction means is provided with a pad support with at least one protrusion (30, 31) able to engage in a notch (32, 33) arranged on the clevis or on the nose of the caliper, the notches and the associated protrusions forming means for securing the friction means to the clevis or the caliper nose.

7. The brake according to claim 6, **characterized in that** a guide spring (41) is inserted between the caliper or the clevis and the corresponding friction means while being placed around a protrusion.

8. The brake according to one of claims 1 to 7, **characterized in that**
- at least one support of a friction means is provided with at least a first recess (38) and the caliper nose and/or the clevis is provided with a second recess (39),
- at least one removable block (37) is housed partially in the first recess and in the second recess.

9. The brake according to one of claims 1 to 8, **characterized in that** at least one friction means is connected to the nose of the caliper and/or clevis via at least one screw (47) and nut (48).

10. The brake according to one of claims 1 to 9, **characterized in that** the caliper nose bearing the second friction means is hollowed out in its middle by an orifice (34) delimiting, on either side of the surface, a first extension (35) and a second extension (36), the second friction means being attached to the caliper nose via at least one of these extensions.

11. The brake according to claim 10, **characterized in that** a spring (41) connects the first extension (35) to the second extension (36) while attaching to the second friction means by securing means.

12. The brake according to one of claims 1 to 11, **characterized in that** the material making up the caliper is distributed in a larger quantity around a first location and around a second location, the first location and the second location being placed along a periphery of the disc and opposing one another, than around a center of this same caliper also located along the periphery of the disc.

13. The brake according to one of claims 1 to 12, **characterized in that** a support of a friction means (8, 9) includes two lugs (25, 26) and a body (27), each of the lugs extending to form a hook (50), the hook delimiting, with the body, an embedding housing (51) intended to accommodate a protuberance (52) with a complementary shape formed by the clevis or by the caliper.
